# FASCICULE DE BREVET EUROPEEN

(11) **EP 2 103 218 B1**
(45) Date de publication et mention de la délivrance du brevet: **03.06.2015**
(21) Numéro de dépôt: 09305244.7
(22) Date de dépôt: 17.03.2009
(51) Int. Cl.: A21C 3/04, A21C 5/00

(54) **Trémie comprenant un dispositif pour favoriser l'écoulement de pâte de boulangerie, viennoiserie ou analogue, le long d'une paroi**
Trichter mit einer Vorrichtung zur Erleichterung der Strömung von Teig von Bäckereien, Konditoreien oder Ähnlichen, entlang einer Wand
Hopper comprising a device for enhancing the flow of bakery dough, pastry dough or similar, along a wall

(30) Priorité: 19.03.2008 FR 0851774
(43) Date de publication de la demande: 23.09.2009
(73) Titulaire: MECATHERM, Société Anonyme, 67130 Barembach (FR)
(72) Inventeur: Zorn, Bernard, F - 67700, Saverne (FR)
(74) Mandataire: Rhein, Alain

(56) Documents cités:
- EP-A- 1 400 173
- WO-A-01/05236
- DE-C- 951 081
- FR-A- 2 462 868
- GB-A- 771 671
- US-A- 2 009 388
- US-A- 2 642 013
- US-A- 5 466 143

## Description

L'invention concerne une trémie comprenant un dispositif pour favoriser l'écoulement gravitaire de pâte de boulangerie, viennoiserie ou analogue, le long d'une paroi, pour l'alimentation d'un dispositif de traitement aval, notamment d'une diviseuse volumétrique de pâte.

La présente invention entre dans le domaine de la préparation et de la manutention de pâte de boulangerie, viennoiserie, pâtisserie ou analogue. L'invention concerne plus particulièrement l'écoulement d'une telle pâte le long d'une surface d'une trémie.

Dans l'industrie boulangère, les dispositifs destinés au transport, au stockage et au traitement de la pâte, par exemple un dispositif destiné à diviser cette pâte à en pâtons, dénommé ci-après une diviseuse, sont très fréquemment alimentés au travers d'une trémie dans laquelle est déversée la pâte, notamment en sortie d'un pétrin. Cette trémie sert, par conséquent, de contenant à l'intérieur duquel s'écoule progressivement, la pâte dont le rechargement s'effectue de manière régulière.

L'inconvénient majeur de l'alimentation en pâte de la diviseuse est précisément son écoulement le long des parois du contenant d'approvisionnement.

En effet, il est nécessaire de lubrifier régulièrement les parois de ce contenant afin d'assurer un bon écoulement de la pâte vers le dispositif de traitement en aval.

A ce titre, il est par exemple connu, par le document FR-A-2.902.293, un procédé de division volumétrique de pâte et son dispositif de mise en oeuvre. En ce qui concerne ce dernier, il comporte une trémie destinée à contenir la pâte à diviser et pourvue, dans sa partie basse, d'une ouverture communiquant avec une chambre de gavage apte à calibrer la quantité de pâte à diviser. Tout particulièrement, cette diviseuse comporte des moyens pour découper en pâtons cette quantité de pâte calibrée dans la chambre de gavage. Par ailleurs, elle comporte des moyens de retournement de cette chambre de gavage permettant le déversement des pâtons sur un support d'évacuation.

A ce propos, chaque compartiment de la chambre de gavage comporte un piston destiné, non seulement, à favoriser l'éjection mécanique des pâtons de leur compartiment respectif, mais, en outre, contribuant au calibrage de la quantité de pâte contenue dans la chambre de gavage.

L'on a pu constater que l'une des opérations les plus longues dans un cycle complet de division de la pâte en pâtons est le remplissage de la chambre de gavage qui s'effectue par écoulement gravitaire de la pâte depuis la trémie d'alimentation.

Dans le document FR-A-2.902.293, il a été mis en avant les inconvénients résultant d'un remplissage sous contrainte de la chambre de gavage en pâte.

Il est en effet connu d'entraîner cette pâte par aspiration en partie basse de la trémie d'alimentation, ceci sous l'action de pistons de manière à forcer cette pâte dans la chambre de gavage. Une fois la quantité de pâte aspirée, un couteau découpe la pâte en partie basse de la trémie, tout en refermant la chambre de gavage dans laquelle est ensuite procédé à une opération de calibrage par compression de la pâte contenue.

Il a été mis en évidence que cette technologie a pour conséquence de soumettre la pâte à d'importantes contraintes d'où résulte une augmentation non négligeable de sa densité. De plus, les tensions emmagasinées dans la pâte, matériau possédant une élasticité et une mémoire de forme, ressortent lors du travail des pâtons entraînant une irrégularité dans les produits obtenus.

Cette technologie présente un autre inconvénient, à savoir la puissance conséquente nécessaire pour aspirer et comprimer la pâte, ceci en raison de la résistance qu'oppose cette dernière.

Aussi, les diviseuses, jusqu'alors conçues selon ce principe de fonctionnement, comportaient un nombre limité de pistons et ne permettaient de délivrer, au cours d'un cycle de division, qu'un nombre réduit de pâtons.

En conséquence, ces diviseuses volumétriques connues étaient nécessairement limitées en cadence de production.

En cela se distingue la solution proposée par le document FR-A-2.902.293. En effet, en laissant la pâte s'écouler librement dans la chambre de gavage, celle-ci ne requiert aucune puissance pour son remplissage. Ses dimensions peuvent être conséquentes et, à chaque cycle de division, elle peut délivrer un nombre élevé de pâtons, sans compter que cette opération de division, s'effectuant sans contraindre excessivement la pâte, permet d'obtenir des produits de qualité supérieure.

Il n'empêche que chaque cycle de division reste dépendant du temps de remplissage de la chambre de gavage et, donc, du temps d'écoulement de la pâte à l'intérieur de la trémie.

Afin diminuer le temps de remplissage, des dispositifs de l'état de la technique prévoit des rouleaux ou tapis à bande afin d'accélérer le gavage de la pâte. De tels dispositifs sont décrits dans les documents EP 1 400 173, WO 01/05236 ou encore US 2 642 013. Le document FR 2462868 divulgue une trémie selon le préambule de la revendication 1. Des convoyeurs à bandes sont mis en rotation à l'intérieur de la trémie, dans le sens d'écoulement de la pâte, au niveau de son ouverture en partie basse.

De tels dispositifs présentent de nombreux inconvénients, en particulier lié à l'entretien complexe et le problème d'adhérence de la pâte.

A ce propos, cet écoulement est contrarié par le pouvoir adhérent de la pâte de boulangerie le long des parois de cette trémie. Bien sûr, pour limiter cette adhérence l'on a d'ores et déjà pensé appliquer sur ces parois, notamment par pulvérisation, un lubrifiant, sans compter que ces parois sont, elles-mêmes, très souvent, traitées au travers d'un revêtement composé d'une couche de résine fluocarbonée pour diminuer cette adhérence.

Toutefois, la pâte a tendance à absorber ce lubrifiant déposé le long desdites parois de la trémie et il convient d'en rajouter continuellement. Cependant, les installations de production de produits de boulangerie fonctionnement habituellement en continue. Aussi, une fois chargées en pâte, les parois intérieures de la trémie, située sous le niveau de pâte, ne peuvent plus être lubrifié convenablement.

Par ailleurs et comme déjà indiqué plus haut, dans la mesure où la lubrification doit se faire de manière constante, la consommation d'huile est importante, générant, non seulement, un surcoût de production, mais aussi l'addition de matière grasse au produit final.

Précisément, cette addition de matière grasse peut polluer et dégrader la qualité du produit obtenu.

La présente invention a su apporter une réponse aux inconvénients précités. C'est dans le cadre d'une première démarche inventive que l'on a imaginé accompagner l'écoulement gravitaire de la pâte, plus particulièrement pendant la phase d'alimentation de l'unité de traitement aval de cette pâte.

Dans le cadre de l'application plus particulière à une diviseuse, l'on a imaginé que cet accompagnement intervient au moment du chargement, donc de l'alimentation de la chambre de gavage, sachant qu'une fois cette dernière remplie et que s'effectuent les différentes opérations de division et de déversement des pâtons, cette pâte peut à nouveau s'écouler librement au fond de la trémie jusqu'au cycle suivant.

A cet effet, l'invention concerne une trémie selon la revendication 1.

Les avantages qui découlent de la présente invention consistent en ce qu'au travers de la mobilité de la paroi, la vitesse d'écoulement de la pâte n'est plus strictement dépendant de son pouvoir d'adhérence à cette dernière.

Par ailleurs, par le choix d'une course déterminée de la mobilité de cette paroi, on peut effectuer cet accompagnement de la pâte de manière à assurer la délivrance, en aval, d'une quantité de pâte déterminée.

De manière avantageuse, cet accompagnement peut se faire pour délivrer et repousser une quantité de pâte au bas de la trémie correspondant sensiblement à la quantité de pâte nécessaire pour remplir la chambre de gavage, ceci au travers de la détermination de la course de la paroi mobile.

A ce propos, cette course de la paroi mobile peut être prévue réglable.

D'ailleurs, une fois cette chambre de gavage parfaitement remplie et pendant qu'interviennent les différentes étapes de division puis de déversement des pâtons sur un dispositif d'évacuation, la ou les parois mobiles peuvent être repoussées dans leur position initiale, donc dans une direction opposée à celle de l'écoulement de la pâte. Dans ce cas, la vitesse de déplacement de ces parois peut être choisie pour entraîner un minimum de pâte en sens inverse à leur écoulement gravitaire. Surtout, cet écoulement gravitaire peut ensuite s'effectuer librement et en temps mort, c'est-à-dire jusqu'à ce que la chambre de gavage, libérée de son chargement précédent, se présente à nouveau sous la trémie pour un nouveau cycle de remplissage.

D'autres buts et avantages de la présente invention apparaîtront au cours de la description qui va suivre se rapportant à un exemple de réalisation donné à titre indicatif et non limitatif.

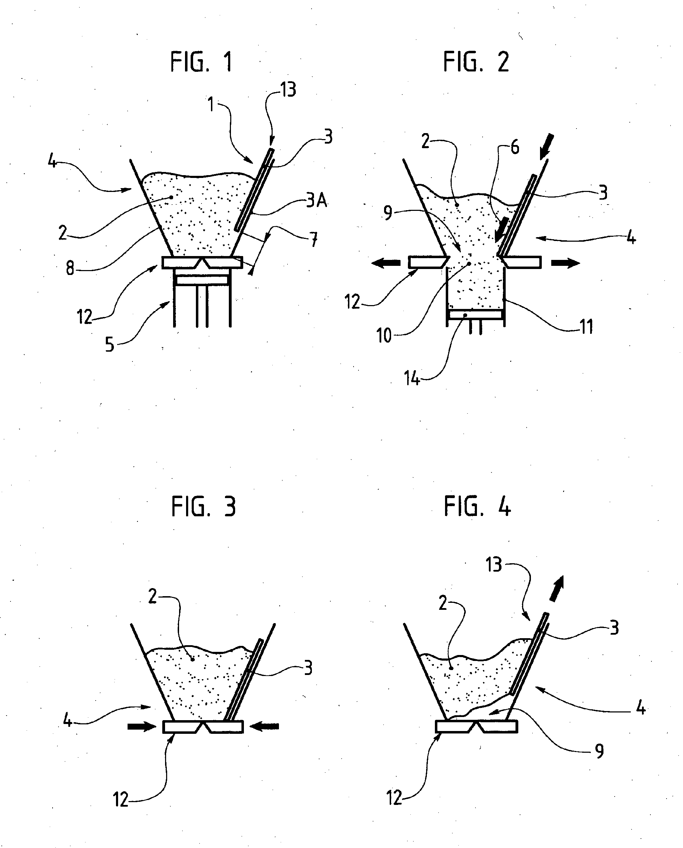

La compréhension de cette description sera facilité en se référant au dessin ci-joint dans lequel les figures 1 à 4 illustrent, de manière schématisée, une trémie selon l'invention pour l'alimentation d'une unité de traitement illustrée schématiquement sous forme d'une diviseuse volumétrique de pâte en pâtons, sachant que :
- La figure 1 représente schématiquement la trémie selon l'invention comprenant une paroi mobile, cette paroi étant représentée dans sa position avant ouverture de cette trémie et remplissage de la chambre de gavage disposée en dessous ;
- La figure 2 est une représentation similaire à la figure 1 représentant la position de la paroi mobile, après accompagnement de la pâte et remplissage de la chambre de gavage ;
- La figure 3 est une vue similaire aux figures 1 et 2 représentant la position de la paroi mobile lors de la fermeture de l'ouverture en partie inférieure de la trémie et séparation de la chambre de gavage ;
- La figure 4 est une représentation similaire aux figures 1 à 3 précédentes illustrant le retour de la paroi mobile dans sa position initiale pour un nouvel accompagnement de l'écoulement de la pâte dans la trémie.

La présente invention concerne une trémie (4) comprenant un dispositif 1 conçu pour favoriser l'écoulement gravitaire de pâte 2 de boulangerie, viennoiserie ou analogue le long d'une paroi 3.

Pour mieux comprendre la présente invention, celle-ci a été illustrée dans le dessin et décrite ci-dessous sous forme d'une trémie 4 dans laquelle est déversée la pâte 2 pour l'alimentation d'une unité de traitement aval 5. Cette dernière a été représentée, schématiquement sous forme d'une diviseuse volumétrique de la pâte 2 en pâtons.

Le dispositif 1 selon l'invention, consiste en ce que ladite paroi 3 est mobile dans la direction 6 d'écoulement de ladite pâte 2 le long de cette paroi 3 pour l'accompagner sur une course 7 déterminée.

Avantageusement, cette paroi mobile 3 est entraînée par des moyens moteurs adaptés (non représentés), conçus apte à assurer sont entraînement dans la direction 6 d'accompagnement de la pâte 2, ceci suivant la course 7, mais aussi dans une direction inverse pour ramener cette paroi dans sa position initiale. Plus particulièrement, ces moyens moteurs sont conçus pour assurer cet entraînement suivant des vitesses différentes dans l'une et l'autre direction, comme cela sera expliqué plus en avant dans la description.

En outre cette paroi 3 est montée mobile sur une paroi fixe 3A.

Selon une particularité de l'invention, la course 7 peut être prévue réglable, ceci pour repousser et délivrer une quantité de pâte déterminée.

Dans les figures 1 à 4, il a été illustré la trémie 4 sous forme d'un entonnoir comportant essentiellement deux flancs longitudinaux inclinés et opposés 3, 8 et des parois d'extrémité non représentées. Cette trémie 4 comporte, en partie basse 9, une ouverture 10, sachant que sous cette trémie 4, sur tout ou partie de sa longueur, vient s'étendre une chambre de gavage 11 destinée à recevoir, au travers de l'écoulement par gravité de la pâte 1 depuis la trémie 4, une quantité de pâte à diviser en pâtons 2.

A noter que cette ouverture 10 en partie basse 9 de la trémie 4, est susceptible d'être refermée au travers d'un outil de coupe 12, ici représenté sous forme de deux couteaux prévus mobiles en translation horizontale suivant des directions opposées.

En se référant à présent plus particulièrement à la figure 1, dans la trémie 4 on voit stocké de la pâte 2. Celle-ci remplit parfaitement cette trémie 4 jusqu'en partie basse 9 dont l'ouverture 10 est refermée par l'outil de coupe 12. Cette trémie 4 comporte une paroi 3 mobile, ici dans une première position 13, dans laquelle cette paroi 3 peut exécuter ultérieurement la course 7 pour accompagner l'écoulement gravitaire de la pâte 2, après dégagement de l'ouverture 10 par l'outil de coupe 12. Dans le mode de réalisation représenté, la paroi mobile correspond à l'un des flancs 3, 8 inclinés de la trémie 4.

C'est précisément ce que l'on a souhaité représenter dans la figure 2 où l'on voit les deux couteaux de l'outil de coupe 12 repoussés latéralement, sachant que sous l'ouverture 10 ainsi dégagée de la trémie 4, s'étend la chambre de gavage 11.

Dans le mode de réalisation illustré dans les figures, cette chambre de gavage 11 comporte un fond mobile sous forme d'un piston 14 qui, s'il a été illustré en position haute dans la figure 1, est représenté, dans cette figure 2, en position basse délimitant le volume de remplissage de cette chambre de gavage 11.

Si le remplissage de cette dernière s'effectue par écoulement gravitaire de la pâte 2, cet écoulement a été accompagné, dans la trémie 4, par la paroi 3 ayant exécuté la course 7 dans la direction d'écoulement de cette pâte 2, le long de cette paroi 3.

A noter que cette course 7 de la paroi 3 peut être déterminée de manière à délivrer une quantité de pâte déterminée au travers de cet accompagnement.

Ainsi, dans l'application représentée dans les figures du dessin ci-joint, cette course 7 de la paroi 3 est préférentiellement déterminée pour favoriser l'écoulement et la délivrance d'une quantité de pâte 2 pour le remplissage de la chambre de gavage 11.

Celle-ci étant à présent parfaitement remplie, l'ouverture 10 en partie basse 9 de la trémie 4 peut être refermée par l'outil de coupe 12, comme représenté dans la figure 3.

Cette fermeture peut être partielle dans un premier temps pour permettre une légère remontée dans la trémie 4 de la pâte 2, lors d'une opération de calibrage de la quantité de pâte 2 dans la chambre de gavage 12 au travers du piston 14.

La figure 4 illustre la paroi mobile 3 dans son déplacement inverse pour regagner sa première position 13 dans laquelle elle pourra à nouveau accompagner l'écoulement de la pâte 2, en particulier lors d'un prochain cycle de remplissage de la chambre de gavage 11.

De manière préférentielle, cette remontée ou cette course inverse de la paroi mobile 3 est exécutée à une vitesse telle à vaincre, si possible, les forces d'adhérence de la pâte sur la paroi mobile 3. Tout du moins, cette vitesse est définie suffisante pour vaincre la résistance au cisaillement de la pâte 2 de manière à entraîner un minimum de cette pâte 2 dans une direction opposée à celle de son écoulement dans la trémie 4.

Une telle paroi mobile 3 est montée coulissante grâce à des glissières implantées à ses extrémités ou en dessous.

Par ailleurs, la commande en déplacement peut être assurée par tout type de moyen moteur adapté, en particulier à l'aide de vérins capables de vaincre ces efforts de résistance de la pâte lorsqu'il s'agit de repousser ladite paroi mobile 3 dans sa position initiale au-delà d'une course d'accompagnement de cette pâte.

Préférentiellement, la paroi mobile 3 vient se superposer à une paroi inférieure fixe 3A évitant l'écoulement de la pâte 2 en dehors du contenant.

Dans le cadre de l'application à une trémie 4, le flanc paroi mobile 3 vient doubler un flanc 3A fixe de l'enveloppe de cette trémie 4. Si au moins un de ces flancs de l'enveloppe de la trémie 4 peut, ainsi, être doublé d'un flanc mobile 3, il est possible, bien sûr, de doubler d'une paroi mobile 3, une autre paroi additionnelle, notamment le flanc opposé 8, voire toutes les parois de la trémie 4.

D'ailleurs, dans un tel cas, ces parois ou flancs mobiles 3, 8 peuvent assurer leur course 7 d'accompagnement de l'écoulement de la pâte 2, soit de manière synchrone, soit décalée dans le temps pour, selon le cas, accélérer la délivrance de la pâte ou augmenter la quantité de pâte délivrée.

A noter, une nouvelle fois, que les courses 7 de ces parois 3, 8 ne sont pas nécessairement identiques. De plus elle peut être prévue réglable pour chacune d'elles.

Les avantages découlant de la présente invention consistent en ce que, tout en garantissant un écoulement gravitaire de la pâte, celle-ci peut être délivrée rapidement au travers de la trémie qui la contient. De plus, grâce à l'accompagnement de la pâte, il est possible de gérer la quantité de pâte délivrée en sortie de trémie pour assurer un remplissage positif, efficace de la chambre de gavage 11. Il en résulte, bien sûr, une cadence augmentée des cycles de division dans le cadre de l'application de l'invention à une diviseuse.

Finalement, on observera, qu'en accompagnant, ainsi, la pâte par la paroi le long de laquelle elle est amenée à s'écouler, on diminue, considérablement, les besoins en lubrifiants.

L'invention représente, par conséquent, un net progrès technique dans le domaine considéré.

## Revendications

1. Trémie (4) pour l'alimentation en pâte de boulangerie, viennoiserie ou analogue, d'une unité de traitement aval (5), comportant au moins un dispositif (1) pour favoriser l'écoulement de ladite pâte le long d'une paroi (3) de ladite trémie, ladite paroi (3) étant mobile et entrainable dans la direction (6) d'écoulement gravitaire de ladite pâte (2), depuis une position initiale, pour accompagner celle-ci sur une course (7) déterminée, ladite paroi (3) étant superposée par rapport à une paroi inférieure fixe (3A) de ladite trémie de manière à la doubler, **caractérisé par le fait que** ladite paroi mobile (3) est de longueur finie, est montée coulissante par rapport à ladite paroi fixe (3A) de la trémie grâce à des glissières implantées à ses extrémités ou en dessous et est entrainable dans une direction inverse à l'écoulement de la pâte de manière à la ramener en position initiale.

2. Trémie selon la revendication 1, **caractérisé par le fait que** la paroi mobile (3) est entraînée par des moyens moteurs adaptés.

3. Trémie selon la revendication 2, **caractérisé par le fait que** lesdits moyens moteurs sont conçus aptes à entraîner la paroi mobile (3) dans la direction (6) d'écoulement de la pâte (2) à une vitesse inférieure à la vitesse d'entraînement de cette paroi (3) en sens inverse pour ramener celle-ci dans sa position initiale.

4. Trémie selon l'une quelconque des revendications précédentes, **caractérisé par le fait que** la course (7) de la paroi mobile (3) est réglable, pour repousser et délivrer une quantité de pâte déterminée.

5. Procédé d'alimentation en pâte de boulangerie, viennoiserie ou analogue d'une chambre de gavage (1) depuis une trémie (4) selon l'une quelconque des revendications précédentes, dans lequel ladite pâte est contenue dans ladite trémie (4), **caractérisé en ce qu'**il consiste à favoriser l'écoulement gravitaire de ladite pâte au sein de ladite trémie (4), à savoir :
en entraînant ladite paroi mobile (3) depuis une position initiale et selon une course (7), dans une direction d'accompagnement de ladite pâte, ladite paroi mobile (3) étant superposée par rapport à une paroi inférieure fixe (3A) de ladite trémie de manière à la doubler, ladite paroi mobile. (3) étant de longueur finie étant montée coulissante par rapport à ladite paroi fixe (3A) de la trémie grâce à des glissières implantées à ses extrémités ou en dessous;
puis
- en entraînant ladite paroi mobile (3) dans une direction inverse pour la ramener dans ladite position initiale.

## Patentansprüche

1. Trichter (4) zum Zuführen von Bäckerei-, Konditoreiteig oder dergleichen zu einer nachgeschalteten Verarbeitungseinheit (5), der mindestens eine Vorrichtung (1) umfasst, um die Strömung von Teig entlang einer Wand (3) des Trichters zu erleichtern, wobei die besagte Wand (3) ab einer Ausgangsposition in der Richtung (6) der Strömung unter Schwerkraft des Teiges (2) beweglich und antreibbar ist, um diesen letzteren entlang einem bestimmten Hub (7) zu begleiten, wobei die besagte Wand (3) relativ zu einer festen unteren Wand (3A) des besagten Trichters überlagert ist, um diese zu verdoppeln, **dadurch gekennzeichnet, dass** die besagte bewegliche Wand (3) eine endliche Länge aufweist, dadurch, dass sie über an ihren Enden oder unterhalb angebrachte Gleitleisten bezüglich der besagten festen Wand (3A) des Trichters gleitbar montiert und in einer umgekehrten Richtung zu der Strömung des Teiges antreibbar ist, um sie in ihrer Ausgangsposition rückzustellen.

2. Trichter nach Anspruch 1, **dadurch gekennzeichnet, dass** die bewegliche Wand (3) durch angepasste Antriebsmittel angetrieben wird.

3. Trichter nach Anspruch 2, **dadurch gekennzeichnet, dass** die besagten Antriebsmittel geeignet vorgesehen sind, um die bewegliche Wand (3) in der Richtung (6) der Strömung des Teiges (2) mit einer geringeren Geschwindigkeit als die Geschwindigkeit zum Antreiben dieser Wand (3) in umgekehrter Richtung anzutreiben, um sie in ihre Ausgangsposition rückzustellen.

4. Trichter nach irgendeinem der vorhergehenden Ansprüche, **dadurch gekennzeichnet, dass** der Hub (7) der beweglichen Wand (3) einstellbar ist, um eine bestimmte Menge von Teig weiterzudrücken und zu liefern.

5. Verfahren Zuführen von Bäckerei-, Konditoreteig oder dergleichen zu einer Speisekammer (11) ab einem Trichter (4) nach irgendeinem der vorhergehenden Ansprüche, wobei der Teig in dem besagten Trichter (4) enthalten ist, **dadurch gekennzeichnet, dass** es darin besteht, die Strömung unter Schwerkraft des besagten Teiges innerhalb des besagten Trichters zu erleichtern (4), und zwar:
- indem die besagte bewegliche Wand (3) aus einer Ausgangsposition und gemäß einem Hub (7) in einer Richtung der Begleitung des besagten Teiges angetrieben wird, wobei die besagte bewegliche Wand (3) relativ zu einer festen unteren Wand (3A) des besagten Trichters überlagert ist, um diese zu verdoppeln, wobei die besagte bewegliche Wand (3) eine endliche Länge aufweist, dadurch, dass sie über an ihren Enden oder unterhalb angebrachte Gleitleisten bezüglich der besagten festen Wand (3A) des Trichters gleitbar montiert ist;
dann,
- indem die besagte bewegliche Wand (3) in eine umgekehrte Richtung angetrieben wird, um sie in die Ausgangsposition rückzustellen.

## Claims

1. A hopper (4) for supplying bakery, pastry dough or the like to a downstream processing unit (5), including at least one device (1) for promoting the flow of said dough along a wall (3) of said hopper, said wall (3) being movable and drivable in the direction (6) of the flow by gravity of said dough (2), from an initial position, in order to accompany the latter over a determined travel distance (7), said wall (3) being superimposed with respect to a fixed lower wall (3A) of said hopper, so as to double it, wherein said movable wall (3) has a finite length, since it is slidably mounted with respect to said fixed wall (3A) of the hopper through slides implanted at its ends or below and is drivable in an opposite direction to the flow of the dough, so as to restore it into the initial position.

2. The hopper according to claim 1, wherein the movable wall (3) is driven by suitable motor means.

3. The hopper according to claim 2, wherein said motor means are designed capable of driving the movable wall (3) in the direction (6) of flow of the dough (2) at a speed lower than the speed for driving this wall (3) in reverse direction, in order to restore it into its original position.

4. The hopper according to any one of the preceding claims, wherein the travel distance (7) of the movable wall (3) is adjustable, in order to push and deliver a determined quantity of dough.

5. A process for supplying bakery, pastry dough or the like to a booster chamber (11) from a hopper (4) according to any one of the preceding claims, wherein said dough is contained in said hopper (4), wherein it consists in promoting the flow by gravity of said dough within said hopper (4), namely:
- by driving said movable wall (3) from an initial position and according to a travel distance (7) in a direction for accompanying said dough, said movable wall (3) being superimposed with respect to a fixed lower wall (3A) of said hopper in order to the double it, said movable wall (3) having a finite length, since it is slidably mounted with respect to said fixed wall (3A) of the hopper through slides implanted at its ends or below;
then
- by driving said movable wall (3) in a reverse direction, in order to restore it into said initial position.
